# FASCICULE DE BREVET EUROPEEN

(11) **EP 1 089 534 B1**
(45) Date de publication et mention de la délivrance du brevet: **31.03.2004**
(21) Numéro de dépôt: 99810885.6
(22) Date de dépôt: 29.09.1999
(51) Int. Cl.: H04M 3/42, H04M 3/487, H04M 3/493

(54) **Systeme de menu vocal personnalisable**
Personalisierte Informationsverarbeitungsschaltung
Personalised voice response unit

(43) Date de publication de la demande: 04.04.2001
(73) Titulaire: Swisscom AG, 3050 Bern (CH)
(72) Inventeur: Van Kommer, Robert, 1752 Villars-sur-Glane (CH)
(74) Mandataire: Saam, Christophe

(56) Documents cités:
- EP-A- 0 605 166
- EP-A- 0 903 922
- US-A- 5 255 305
- US-A- 5 583 922
- US-A- 5 873 064

## Description

La présente invention concerne un serveur de télécommunication vocal accessible par une pluralité d'usagers d'un réseau téléphonique, ainsi qu'un procédé de personnalisation d'un tel serveur de télécommunication vocal.

On connaît déjà des systèmes de serveurs vocaux utilisés par exemple par des sociétés de télécommunications ou par d'autres prestataires de services, par exemple des banques, des agences de location de voitures, etc.., pour fournir différents types de prestations. De manière générale, ces serveurs vocaux proposent une interface vocale aux usagers y accédant à travers le réseau téléphonique commuté, permettant à l'usager de se déplacer dans un système de menus vocaux au moyen de commandes vocales et/ou tapées sur le clavier du téléphone, afin d'accéder à différentes fonctions ou prestations.

La navigation au travers d'un tel système de menus vocaux est assez laborieuse, et les besoins des usagers varient en fonction de leur familiarisation avec le serveur de télécommunication vocal et des prestations habituellement demandées. On connaît donc déjà des systèmes de serveurs vocaux capables d'adapter l'interface vocale en fonction de l'expérience présumée de l'usager et des prestations habituellement recherchées.

Par ailleurs, on connaît également des assistants vocaux offrant à l'usager un choix de fonctions, par exemple la navigation dans un répertoire ou l'établissement d'une connexion, commandées par la voix. Ces assistants vocaux sont généralement installés dans l'équipement terminal de l'usager et ne sont donc pas partagés entre plusieurs usagers; ils ne peuvent donc être utilisés que dans des équipements terminaux spécialement prévus à cet effet.

La demande de brevet européen EP 0'605'166 décrit un système de modifier un assistant vocal par un programme ayant une interface graphique. La possibilité de modifier l'assistent vocal est toutefois limitée aux fournisseurs de ce service, et elle n'est pas accessible aux usagers finaux. De plus, les modifications sont limitées dans ce document à des données statiques.

Le brevet US 5'873'064 décrit une méthode pour implémenter une macro vocale par analyse de l'ensemble des états souhaités dans l'application finale. Chaque état comprend une collection d'objets fenêtre.

Le brevet US 5'583'922 décrit un réseau de télécommunication comprenant un serveur vocal pouvant être accédé par Internet.

Le brevet US 5'255'305 décrit un assistant vocal pouvant être modifié par le fournisseur de services en utilisant un protocole basé sur des objets vecteur.

La demande de brevet européen EP 0'903'922 décrit un système de traitement pouvant être accédé par des processus clients par une interface orientée objet appropriée.

Un but de la présente invention est de proposer un serveur de télécommunication vocal, ainsi qu'un programme de commande d'un tel serveur de télécommunication vocal, offrant des possibilités de personnalisation améliorées.

Un autre but est de proposer un serveur de télécommunication vocal partagé pouvant être utilisé par plusieurs usagers à partir de n'importe quel type d'équipement terminal permettant d'établir une communication vocale au travers d'un réseau téléphonique publique ou privé.

Un autre but est de proposer un procédé de personnalisation d'une interface vocale plus souple que les procédés connus.

Selon l'invention, ces buts sont atteints au moyen des éléments des revendications indépendantes, des caractéristiques préférentielles étant par ailleurs indiquées dans les revendications dépendantes.

En particulier, ces buts sont atteints selon l'invention au moyen d'un serveur de télécommunication vocal comprenant une zone de mémoire, une pluralité de collections de composants logiciels étant mémorisées dans ladite zone de mémoire, lesdits composants logiciels comprenant des programmes ou des portions de programme, chacune desdites collections étant associée à au moins un desdits usagers et déterminant l'interface vocale dudit serveur lorsque l'usager y accède par ledit réseau téléphonique commuté, au moins une pluralité desdits usagers ayant la possibilité de personnaliser l'interface vocale qui leur est proposée en modifiant ladite collection de composants logiciels.

Cette solution présente l'avantage de permettre à chaque usager de personnaliser lui-même l'interface du serveur de télécommunication vocal, en modifiant ou éditant une collection de composants logiciels définissant cette interface.

Les composants logiciels sont de préférence constitués par des unités logicielles réutilisables et de préférence précompilées, par exemple par des beans, des applets ou des programmes applicatifs.

Selon les composants logiciels choisis, la collection de composants logiciels ainsi assemblée par l'usager peut constituer un applet, une application, ou un programme compilé ou interprétable par exemple, définissant l'interface vocale proposée à l'usager lorsqu'il accède au serveur de télécommunication vocal.

L'invention sera mieux comprise à l'aide de la description donnée à titre d'exemple et illustrée par les figures annexées qui montrent:
La figure 1, une représentation schématique du flux d'informations à travers les différents composants du serveur de télécommunication vocal en mode utilisation, c'est-à-dire lorsque l'usager utilise les prestations fournies par le serveur de télécommunication vocal.
La figure 2, une représentation schématique du flux d'informations à travers les différents composants du serveur de télécommunication vocal en mode d'édition vocale, c'est-à-dire lorsque l'usager personnalise au moyen de commandes vocales l'interface vocale mise à sa disposition par le serveur.
La figure 3, une représentation schématique du flux d'informations à travers les différents composants du serveur de télécommunication vocal en mode d'édition via Internet, c'est-à-dire lorsque l'usager personnalise au moyen d'un navigateur Internet l'interface vocale mise à sa disposition par le serveur.
La figure 4, une représentation schématique du flux d'informations à travers les différents composants du serveur de télécommunication vocal en mode de débogage, c'est-à-dire lorsque l'usager débogue une collection de composants logiciels constituée.

Dans la suite de la description ainsi que dans les revendications, on utilisera le terme de composant logiciel pour désigner n'importe quel logiciel ou portion de logiciel, en particulier n'importe quel composant de logiciel précompilé, par exemple un bean, un applet ou un objet en langage orienté objet. On utilisera le terme de collection de composants logiciels pour désigner tout assemblage d'un ou plusieurs composants logiciels constituant un applet, une portion de programme ou un programme complet.

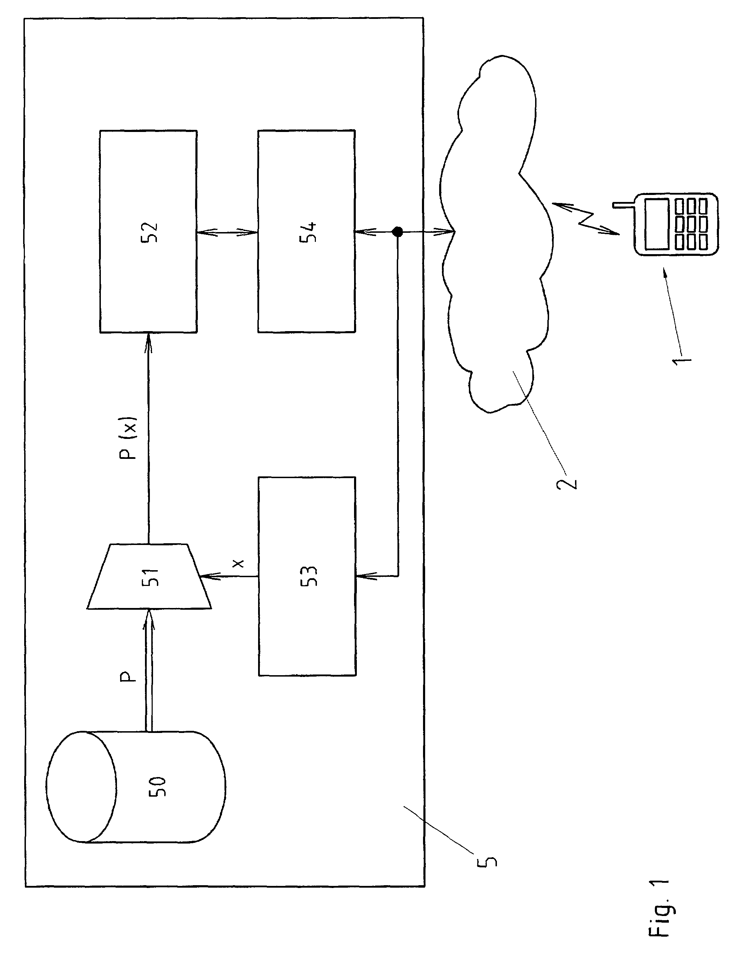

La figure 1 illustre de manière schématique un système comprenant un usager connecté au moyen d'un équipement d'usager 1 à un réseau téléphonique 2 lui permettant de se connecter notamment à un serveur de télécommunication vocal 5. Le réseau téléphonique 2 est de préférence un réseau téléphonique commuté public ou privé de type fixe, par exemple un réseau RNIS (réseau numérique à intégration de services) ou conventionnel (PSTN, "Public Switched Telecommunication Network), ou de type mobile, par exemple un réseau cellulaire numérique de type GSM (Global System for Mobile Communications), UMTS, etc.. L'invention peut cependant être utilisée avec n'importe quel type de réseau permettant d'établir une communication vocale entre deux usagers, par exemple aussi avec un réseau de type Internet offrant des applications de téléphonie via Internet, ou un réseau de communication par lignes d'alimentation électriques (PLC, Power Line Communication), l'invention n'étant pas limitée à ces exemples particuliers.

L'équipement d'usager 1 peut être constitué par n'importe quel type de combiné fixe ou mobile, par exemple par un téléphone fixe ou un téléphone mobile muni d'une carte d'identification d'abonné, par exemple une carte SIM (Subscriber Identification Module) ou WIM (WAP Identification Module).

Le serveur de télécommunication vocal 5 peut être administré par l'opérateur du réseau téléphonique 2 ou par un prestataire de service, par exemple une banque, une agence de location, un courtier en informations, etc.. Il comprend une zone de mémoire, par exemple une banque de données 50, dans laquelle un profil d'usager p(x) est mémorisé pour chaque usager x du serveur de télécommunication vocal. Le profil de chaque usager comporte des modèles de voix et de langage de l'usager, permettant de faciliter la reconnaissance de parole, les préférences de l'usager (langue, méthode d'authentification choisie, données de facturation, numéro de téléphone du raccordement usuel, etc.), une signature vocale et/ou un mot de passe, etc.., ainsi que d'autres données propres à chaque usager.

Selon l'invention, le profil de chaque usager mémorisé dans la banque de données 50 comporte en outre une collection de composants logiciels, par exemple un applet ou un programme, définissant au moins certaines caractéristiques de l'interface vocale pour cet usager.

Le serveur de télécommunication vocal 5 comporte en outre un module d'identification d'appelant 53. L'appelant peut être identifié par exemple au moyen du numéro d'appelant lorsque celui-ci est transmis, par exemple à l'aide de la fonction CLI dans un réseau RNIS ou GSM. Dans une variante préférentielle, l'appelant est identifié indépendamment du raccordement utilisé, par exemple au moyen d'une carte d'identification d'appelant (par exemple une carte SIM ou WIM), d'un mot de passe, ou de données biométriques de l'appelant, par exemple par reconnaissance vocale d'appelant, par exemple au moyen d'un réseau de neurones entraîné à cet effet.

Le serveur de télécommunication vocal 5 comporte en outre un système d'analyse et de synthèse vocale 54, apte notamment à analyser les commandes vocales de l'usager 1 et à synthétiser des réponses ou à fournir des informations sous forme vocale. Le système vocal 54 utilise de préférence le profil d'usager mémorisé dans la banque de données 50 pour améliorer la qualité de l'analyse vocale. Le système d'analyse vocale peut être réalisé de n'importe quelle manière connue, par exemple au moyen d'un réseau de neurones ou de modèles de Markov cachés (HMM, Hidden Markov Models).

L'usager 1 peut accéder aux différentes prestations fournies par le serveur de télécommunication vocal 5 au moyen de commandés vocales dictées à travers le réseau téléphonique 2 et analysées par le système d'analyse vocale 54, et/ou au moyen de touches pressées directement sur le clavier de son combiné.

L'interface vocale du serveur 5 peut par exemple être organisée de manière connue en un système de menus hiérarchiques. Les commandes disponibles dans chaque menu et sous-menu sont restituées vocalement par le système de synthèse vocale 54. Dans une variante préférentielle de l'invention, le menu principal du système, c'est-à-dire celui auquel l'usager accède automatiquement lorsqu'il se connecte au serveur de télécommunication vocal 5, proposé au moins un certain nombre d'options prédéfinies et non personnalisables, par exemple pour mettre le serveur de télécommunication vocal en mode édition, utilisation ou débogage, comme décrit plus bas.

Lorsque l'usager 1 accède au serveur de télécommunication vocal 5 en mode utilisation, le module 53 d'identification d'appetant détermine tout d'abord l'identité x de l'usager, puis sélectionne au moyen du filtre 51 dans la banque de données 50 de profils d'usager le profil d'usager p(x) propre à cet usager. Le profil d'usager p(x) comprend notamment selon l'invention une collection de composants logiciels 52 définissant l'interface vocale du serveur. Par exemple, la collection de composants logiciels 52 peut déterminer la structure des menus vocaux ainsi que les commandés (prestations du serveur) accessibles au travers de ce menu. Le serveur de télécommunication vocal 5 proposé donc à chaque usager une collection de composants logiciels 52 personnalisée, et fournit ainsi aux différents usagers 1 des prestations différentes, ou une organisation en menus et sous-menus des prestations différente.

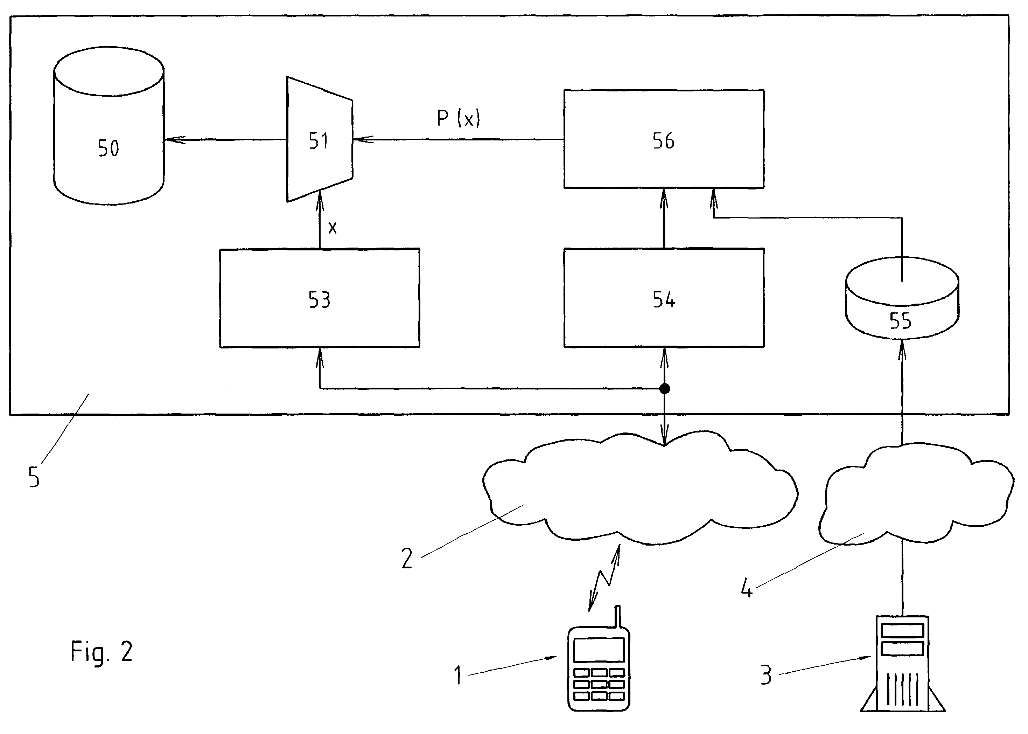

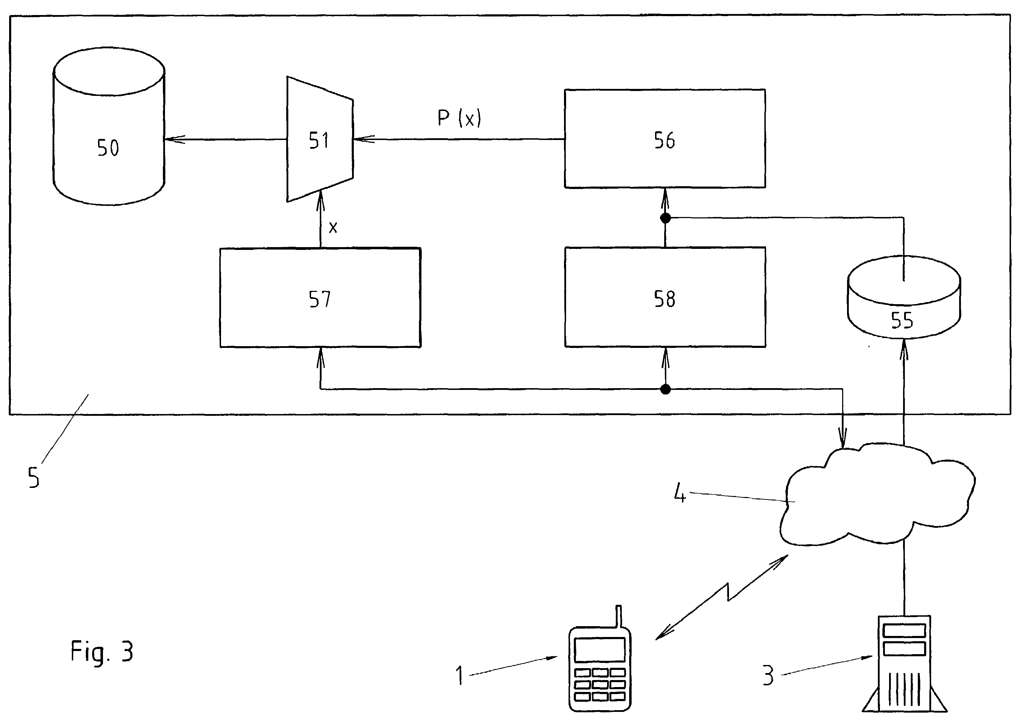

Nous allons maintenant voir à l'aide des figures 2 et 3 comment un usager peut modifier la collection de composants logiciels 52 qui lui est associée et ainsi personnaliser l'interface vocale du serveur de télécommunication vocal 5. La figure 2 illustre le cas d'une modification de la collection au moyen de commandes vocales tandis que la figure 3 illustre le cas de la modification au moyen de commandes envoyées au travers du réseau Internet. Selon différentes variantes d'implémentation du serveur de télécommunication vocal 5, l'une ou l'autre, ou les deux méthodes de modification peuvent être mises à disposition des usagers.

La figure 2 illustre de manière schématique le flux d'information à travers les différents composants du serveur de télécommunication vocal 5 en mode d'édition vocale. Ce mode d'édition vocale peut soit être sélectionné en composant un numéro de téléphone différent de celui utilisé pour appeler le serveur en mode utilisation, ou de préférence sélectionné avec le même numéro suivi d'une commande vocale ou d'une action sur le clavier du combiné dé l'équipement d'usager 1.

Dans une variante, une authentification plus poussée peut être exigée de l'usager lorsqu'il souhaite se mettre en mode édition. Le serveur de télécommunication vocal peut par exemple demander une authentification simple par mot de passe pour utiliser les prestations associées à l'usager 1, et réclamer une signature certifiée par un tiers pour éditer ces prestations.

En mode d'édition vocale, le serveur de télécommunication vocal met à la disposition de l'usager 1 un outil de construction 56 ("builder tool") lui permettant de modifier la collection de composants logiciels qui lui est associée dans la banque de données 50. L'outil de construction 56 met de préférence à disposition de l'usager un certain nombre de composants logiciels réunis dans une palette (ou boîte à outils) 55, que l'usager peut sélectionner, modifier et organiser au moyen de commandes vocales analysées par le module 54.

La palette de composants logiciels 55 peut être mémorisée dans le serveur de télécommunication vocal 5, comme représenté. Dans une variante, la palette peut aussi être mémorisée dans un ou plusieurs serveurs 3 reliés au serveur de télécommunication vocal 5, par exemple au travers du réseau Internet 4. Dans une variante préférentielle de l'invention, l'usager peut sélectionner un certain nombre de composants logiciels à partir d'une palette 55 mémorisée dans le serveur de télécommunication vocal 5, et élargir sa recherche à d'autres composants accessibles depuis le serveur de télécommunication vocal 5 au travers du réseau Internet.

Les composants logiciels auquel l'usager accède sont de préférence constitués par des composants précompilés, par exemple par des "beans". Dans une variante préférentielle de l'invention, les composants logiciels sont constitués par des composants CORBA (marque déposée; Common Object Request Broker Architecture), COM+ (Components Objects Modules, Marque déposée de Microsoft) ou par des beans, par exemple des JavaBeans (marque déposée de SUN), des EJB (Enterprise JavaBeans, marque déposée de SUN), des Servlet-Beans, etc.. réutilisables. Ils permettent de définir des applications complexes en sélectionnant plusieurs composants à partir d'une palette 55 et en définissant leurs interactions et leurs propriétés, sans écrire de code. Les procédures et méthodes invoquées par un composant logiciel donné ne résident pas nécessairement dans le serveur de télécommunication vocal 5, mais peuvent être mémorisées dans une autre machine dans un réseau auquel peut accéder le serveur de télécommunication vocal 5. Dans ce cas, un courtier en requêtes d'objets (ORB, Object Request Broker) sera de préférence prévu pour trouver un objet dans le réseau capable d'implémenter la requête et pour lui faire exécuter cette requête.

L'usager a en outre de préférence la possibilité d'éditer des nouveaux composants logiciels en dictant le code d'un composant. Le texte dicté est alors transcrit en code, par exemple en code Java, JavaScript (marques déposées de SUN) ou Active Server Pages (marque déposée de Microsoft), par le module d'analyse de voix 54.

Nous allons maintenant décrire de manière plus détaillée un exemple très simple de modification par un usager de la collection de composants logiciels qui lui est associée dans la banque de données 50.

L'usager 1 décroche son combiné et se connecte avec le serveur de télécommunication vocal 5. Dans une variante préférentielle, l'usager est automatiquement directement connecté au serveur de télécommunication vocal 5 dès qu'il décroche son combiné, le serveur 5 agissant alors comme unique point d'entrée au réseau de télécommunication 2 (portail vocal).

L'usager indique ensuite qu'il souhaite sélectionner l'interface vocale pour les appels entrants en énonçant "appels entrants" (ou "inbound calls" en anglais). Il indique ensuite qu'il souhaite personnaliser cette interface en disant "Passer en mode Edition" ("Switch to Edit Mode"). Cette commande est reconnue par le module 54 et le serveur de télécommunication vocal confirme le passage en mode édition, qui permet à l'usager de configurer l'interface vocale qui lui est associée dans la banque de données 50.

L'usager 1 définit ensuite qu'il souhaite créer un nouveau programme (une nouvelle collection de composants logiciels), qui efface le programme qui lui était associé jusque là, au moyen de la commande vocale: "Créer un nouveau programme".

Il peut ensuite créer une nouvelle interface vocale en sélectionnant dans la palette 55 un certain nombre de composants logiciels (beans). Par exemple, il peut choisir d'introduire une nouvelle invite au moyen de la commande vocale "Ajouter une invite" ("Add Prompt"). Le serveur de télécommunication vocal répond alors en demandant "Veuillez introduire votre invite". L'usager dit "Je serai de retour à 4 heures". Le serveur de télécommunication vocal 5 répète cette invite et demande s'il a bien compris. L'usager 1 acquiesce en disant "Oui", puis introduit un nouveau composant logiciel dans sa collection: "Ajouter raccrocher" ("Add Hang Up").

L'usager peut alors passer en mode compilation en disant "Passer en mode compilation", puis demander de compiler son programme en disant "Compiler". L'outil de construction 56 vérifie alors la syntaxe de la collection de composants logiciels éditée par l'usager et, selon la nature des composants (précompilés ou non), effectue une compilation de cette collection.

L'usager a ensuite la possibilité de passer en mode exécution pour tester son programme, puis peut raccrocher si tout est en ordre.

Cet exemple permet à l'usager 1 de réaliser une interface vocale simple, comprenant seulement deux composants logiciels et sans menus. La prochaine fois que quelqu'un appelle l'usager 1 sur le numéro de l'interface vocale 5, le serveur de télécommunication vocal répondra par le message "Je serai de retour à 4 heures".

Cette méthode de personnalisation d'interface vocale au moyen de commandes vocales analysées par le serveur 5 est en particulier adaptée pour créer de petites collections de composants logiciels, ou pour apporter des modifications limitées à des collections plus grandes. Pour la création de programmes plus importants, le serveur de télécommunication vocale dispose de préférence d'un mode d'édition par Internet, illustré de manière schématique sur la figure 3.

Dans ce mode, l'usager 1 peut accéder à l'outil de construction 56 lui permettant de modifier la collection de logiciel qui lui est associée dans la banque de données 50 au moyen d'un terminal Internet ou WAP.

Le serveur de télécommunication vocal 5 dispose de moyens 57 permettant à l'usager 1 de s'identifier lorsqu'il se connecte via Internet, par exemple au moyen d'un mot de passe, d'une carte d'identification, d'une signature électronique certifiée par une tierce partie, de données biométriques ou de toute autre moyen adapté. Par ailleurs, le serveur de télécommunication vocal 5 dispose d'un module 58 lui permettant d'interpréter les commandes d'édition reçues au travers du réseau Internet 4, par exemple d'un serveur http ou WAP (Wireless Application Protocole) programmé de manière adéquate.

L'usager 1 peut ainsi se connecter au serveur de télécommunication vocal 5 au moyen d'une liaison Internet, se faire identifier puis commander l'outil de construction 56 pour modifier la collection de composants logiciels qui lui est associée dans la banque de données 50 et définir ainsi son interface vocale propre. De la même façon que ci-dessus, l'usager peut utiliser à cet effet une palette 55 de composants logiciels mis à sa disposition dans le serveur 5 et/ou dans une pluralité de serveurs 3 connectés au serveur de télécommunication vocal 5.

L'usager peut de préférence modifier la collection de composants logiciels qui lui est associée au moyen d'un logiciel spécialisé ou de préférence à l'aide d'un simple navigateur, supportant de préférence le langage JAVA et/ou JAVAScript. Le navigateur permet de préférence d'introduire du texte, par exemple des intitulés de menus vocaux, et permet de préférence une programmation avec un support graphique, par exemple en déplaçant des icônes correspondant à chaque composant logiciel dans un graphe d'application.

L'usager 1 a de préférence également la possibilité de télécharger au travers du réseau Internet des collections complètes de composants logiciels 50 dans ta partie de la banque de données qui lui est associée. De cette manière, l'usager 1 peut par exemple charger dans la banque de données 50 des services et des programmes applicatifs complets, par exemple des programmes acquis auprès de tiers, définissant des interfaces vocales et des fonctions extrêmement sophistiquées. L'usager 1 peut également acquérir auprès de tiers dés composants logiciels isolés qu'il peut réutiliser pour personnaliser l'interface vocale que lui propose le serveur 5.

Le terminal Internet 1 utilisé pour modifier la collection de composants logiciels associée à un usager peut par exemple être constitué par un ordinateur personnel muni d'un navigateur permettant dé le connecter au réseau Internet 4. Dans une variante, le terminal 1 pourrait aussi être constitué par un téléphone portable supportant le protocole WAP.

Le serveur de télécommunication vocal 1 peut de préférence également être accédé de façon synchronisée via le réseau téléphonique 2 et via Internet 4. Ceci permet à l'usager d'éditer à l'aide d'un terminal Internet 3 la collection de composants logiciels p(x) qui lui est associée et de tester simultanément l'interface ainsi créée au moyen de son combiné téléphonique 1, ou inversement de dicter un nouvelle collection et d'observer immédiatement sur l'écran de son terminal Internet le graphe d'application ainsi réalisé.

L'homme du métier comprendra que d'autres méthodes peuvent également être prévues dans le cadre de cette invention pour permettre à l'usager 1 d'éditer la collection de composants logiciels qui lui est associée dans la banque de données 50. Par exemple, l'usager pourrait accéder au serveur de télécommunication vocal par des réseaux autres que Internet, ou envoyer un support informatique contenant ces composants logiciels au gestionnaire du serveur 5 pour qu'il l'installe.

La personnalisation du profil d'usager, en particulier la personnalisation de la collection de composants logiciels associée à un usager, peut être facturée par l'administrateur du serveur de télécommunication vocal 5. Le montant facturé peut selon différentes variantes dépendre de la taille de cette collection, c'est-à-dire de l'espace en kilooctets utilisé par la collection de composants p(x), du temps et du mode d'édition, du temps d'utilisation, du type de composants logiciels choisis, etc.. Lorsque la collection établie par un usager utilise un ou plusieurs composants fournis par un tiers, ou provenant d'un serveur externe 3, une partie au moins du montant facturé peut être retournée par des procédés connus à ce tiers. Dans le cas particulier où le serveur de télécommunication vocal 5 est administré par l'opérateur du réseau de télécommunication 2, le montant facturé peut de préférence être ajouté au montant de la facture téléphonique mensuelle de l'usager 1, ou débité d'une carte à pré-paiement. Dans une variante préférentielle de l'invention, l'usager 1 peut définir lui-même dans le profil p(x) qui lui est associé dans la banque de données 50 le mode de facturation qu'il souhaite adopter.

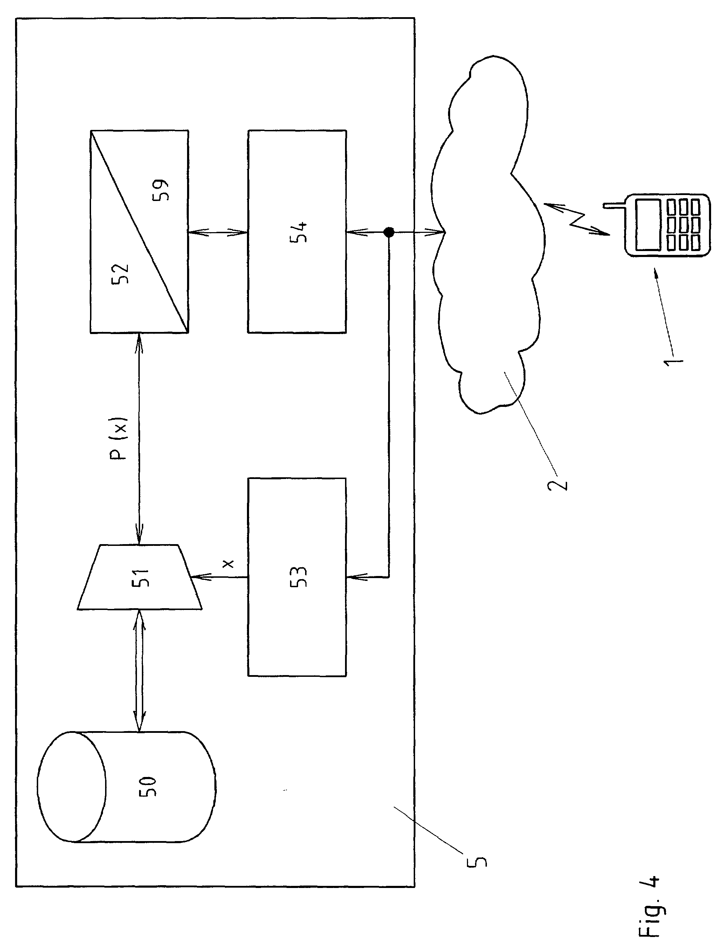

Nous allons maintenant voir à l'aide de la figure 4 un exemple de flux d'informations à travers les différents composants du serveur de télécommunication vocal 5 en mode de débogage. Après avoir modifié la collection de composants logiciels qui lui est associée de l'une des manières décrites ci-dessus, l'usager peut de préférence placer le serveur 5 en mode de débogage au moyen d'une commande appropriée, par exemple au moyen d'une commande vocale. Le mode débogage peut aussi être activé automatiquement lors d'une erreur d'exécution. Un débogueur 59 lui permet alors de vérifier la syntaxe de la collection de composants logiciels ainsi constitués, et d'exécuter le programme pas à pas en indiquant à chaque pas la valeur des variables observées.

Un débogueur pourra être prévu aussi bien pour l'édition en mode vocal (comme illustré sur la figure 2) qu'en mode Internet (figure 3). En mode Internet, le débogueur permet de préférence d'afficher sur le navigateur de l'usager des informations relatives à l'état du programme sous une forme graphique.

Nous allons maintenant décrire à titre d'exemples non limitatifs un certain nombre de composants logiciels pouvant être proposés dans une palette 55 d'un serveur de télécommunication vocal 5 selon l'invention. Tous ces composants logiciels peuvent avantageusement être créés à l'aide de composants CORBA ou de beans EJB.

| | |
|---|---|
| Custom | Ajouter de nouveaux composants, par exemple des composants créés en combinant des composants logiciels existants ou des composants téléchargés via Internet. |
| Record | Enregistrer un message vocal. |
| Play | Restituer un message vocal enregistré. |
| SpeechRecognition | Effectuer une opération de reconnaissance vocale. |
| SpeechSynthesis | Synthétiser un message vocal à partir d'une chaîne de caractères. |
| SpeakerVerification | Vérifier l'identité de la personne qui parle à l'aide de sa voix. |
| SpeakerIdentification | Déterminer l'identité de la personne qui parle (parmi un ensemble de personnes connues) à l'aide de la voix. |
| CallerIdentification | Déterminer l'identité de l'appelant. |
| RecordDTMF | Décoder une séquence DTMF. |
| PlayDTMF | Restituer une séquence DTMF. |
| Prompt | Déterminer un message d'invite proposé à l'appelant. |
| Value | Convertir le résultat du bean "SpeechRecognition" en une valeur d'un certain type. |
| Connect | Etablir une connexion téléphonique au travers du réseau téléphonique commuté, d'Internet, envoyer un fax, un e-mail, etc.. |
| WaitInputCall | Attendre un appel entrant sur le réseau téléphonique commuté, sur Internet, un fax, un e-mail, un voice-mail... |
| Hang up | Fermer le canal de télécommunication courant. |
| Label | Désigner une position dans le graphe de composants du dialogue. |
| Branch | Se déplacer au label indiqué dans le graphe de composants. |
| Loop | Exécuter en boucle une séquence d'un ou plusieurs composants. |
| Link | Lier un message entrant donné avec un message sortant désiré. |
| Variable | Définir une variable. |
| Test | Effectuer des tests sur des variebles. |
| Environment | Donner accès au bean de spécification d'environnement courant. |
| Parallel | Exécution dé sous-graphes en parallèle |
| Transaction | Accéder au serveur de transaction, pour une application de commerce électronique. |
| String | Définir une chaîne dans un environnement JavaBean |
| Portal | Permet de se connecter automatiquement au serveur de télécommunication vocal 5 lorsque le combiné est décroché. |
| Java | Introduire le code Java par dictée ou par Internet (au travers d'une page WEB). |
| JavaScript | Introduire un JavaScript par dictée ou par Internet (au travers d'une page WEB). |
| TeleserviceBeanLIB | Accéder à une palette de composants logiciels disponibles. |
| Transcribe | Convertir une communication téléphonique en un texte et le sauver sur disque. |
| Audio-Conferencing | Etablir une communication téléphonique sur plusieurs canaux simultanément |

L'homme du métier comprendra que ces exemples de composants logiciels ne sont donnés qu'a titre d'illustration afin de mieux faire comprendre le type d'interface vocale qu'il est possible de réaliser grâce au procédé de l'invention. D'autres types de composants logiciels pourront cependant être proposés par l'administrateur du serveur de télécommunication vocal 5 ou par des tierces parties. L'invention concerne donc également des supports de données, tels que disquettes, supports optiques, portions de disques durs, etc, proposés par des tiers et comprenant des composants logiciels spécifiquement destinés à être chargés dans une zone de mémoire 50 d'un serveur de télécommunication vocal 5.

Par ailleurs, l'invention peut être utilisée aussi bien pour personnaliser l'interface vocale du serveur de télécommunication vocal 5 lorsque l'usager 1 y accède que lorsque d'autres usagers du réseau téléphonique 2 souhaitent recourir aux prestations mises à disposition par cet usager. Par exemple, cette invention peut être mise à disposition pour personnaliser un service vers lequel les appels destinés à l'usager 1 et restés occupés ou sans réponse sont déviés.

L'invention peut aussi être utilisée pour personnaliser l'interface d'un serveur 5 pouvant être accédé aussi bien en mode vocal à travers le réseau téléphonique 2 qu'au travers du réseau Internet 3. De cette manière, l'usager peut créer et personnaliser un portail d'accès à des prestations pouvant être accédé par lui-même, ou par des tiers, aussi bien à l'aide d'un combiné téléphonique que d'un terminal Internet.

L'invention concerne en outre également un support de données, tel que disquette, support optique, portion de disque dur, etc.. comprenant un programme apte à être exécuté par le serveur de télécommunication vocal 5 afin de lui faire exécuter le procédé de personnalisation d'interface vocale revendiqué.

De même, l'invention concerne aussi un système de télécommunications comprenant une pluralité d'usagers, au moins un central téléphonique implicitement contenu dans le réseau téléphonique 2 et un serveur de télécommunication vocal, dans lequel le central téléphonique est programmé de façon à ce qu'au moins une partie desdits abonnés se connectent directement audit serveur de télécommunication vocal lorsqu'ils décrochent le combiné. Cette fonctionnalité permet de réaliser de véritables services de portails vocaux offrant une palette de fonctionnalités vaste et extensible aux usagers.

## Revendications

1. Serveur de télécommunication vocal (5) accessible par une pluralité d'usagers (1) d'un réseau téléphonique (2), comprenant:
une zone de mémoire (50), une pluralité de collections (p) de composants logiciels étant mémorisés dans ladite zone de mémoire, lesdits composants logiciel comprenant des programmes ou des portions de programme, chacune desdites collections étant associée à au moins un desdits usagers et déterminant l'interface vocale dudit serveur de télécommunication vocal lors d'un accès par ledit réseau téléphonique,
au moins une pluralité desdits usagers (1) ayant la possibilité de personnaliser l'interface vocale qui leur est proposée en modifiant ladite collection (p(x)) de composants logiciels.

2. Serveur de télécommunication vocal selon la revendication précédente, lesdits composants logiciels comprenant des composants précompilés.

3. Serveur de télécommunication vocal selon la revendication 1, lesdits composants logiciels comprenant des JavaBeans.

4. Serveur de télécommunication vocal selon l'une des revendications précédentes, disposant d'une palette (55) de composants logiciels pouvant être sélectionnés par lesdits usagers.

5. Serveur de télécommunication vocal selon la revendication précédente, comprenant un outil de construction (56) permettant aux usagers (1) de sélectionner des composants logiciels dans ladite palette (55) et de définir l'interaction entre différents composants logiciels de façon à déterminer ladite interface vocale.

6. Serveur de télécommunication vocal selon l'une des revendications 4 ou 5, ladite palette (55) étant mémorisée dans ledit serveur de télécommunication vocal (5).

7. Serveur de télécommunication vocal selon l'une des revendications 4 à 6, ladite palette (55) étant mémorisée dans une pluralité de serveurs (3) auquel ledit serveur de télécommunication vocal (5) est connecté au travers d'un réseau de télécommunications (4).

8. Serveur de télécommunication vocal selon l'une des revendications 5 à 7, comprenant un module d'analyse de voix (54) apte à interpréter des commandes vocales reçues desdits usagers (1) à travers ledit réseau téléphonique commuté pour commander ledit outil de construction (56).

9. Serveur de télécommunication vocal selon la revendication précédente, ledit module d'analyse de voix (54) permettant d'éditer le code d'un composant en le dictant.

10. Serveur de télécommunication vocal selon l'une des revendications 5 à 9, pouvant être relié à Internet (4) et comprenant un module (57) apte à interpréter des commandes reçues à travers Internet pour commander ledit outil de construction (56).

11. Serveur de télécommunication vocal selon l'une des revendications précédentes, comprenant un débogueur (59) pour déboguer lesdites collections de composants logiciels (p(x)).

12. Serveur de télécommunication vocal selon l'une des revendications précédentes, apte à importer une collection de composants logiciels et à l'associer dans ladite zone de mémoire (50) à un usager (1).

13. Serveur de télécommunication vocal selon l'une des revendications précédentes, pouvant être accédé de façon synchronisée au travers d'un réseau téléphonique et par Internet.

14. Système de télécommunications comprenant une pluralité d'usagers (1), au moins un central téléphonique et un serveur de télécommunication vocal (5) selon l'une des revendications précédentes, dans lequel ledit central téléphonique est programmé de façon à ce qu'au moins une partie desdits abonnés se connectent directement audit serveur de télécommunication vocal (5) lorsqu'ils décrochent le combiné.

15. Procédé permettant à un usager (1) de personnaliser l'interface vocale d'un serveur de télécommunication vocal (5) accédé au travers d'un réseau téléphonique,
comprenant une étape de modification par l'usager d'une collection (p(x)) de composants logiciels associée audit usager et déterminant ladite interface vocale, lesdits composants logiciels comprenant des programmes ou des portions de programme.

16. Procédé selon la revendication précédente, lesdits composants logiciels comprenant des composants précompilés.

17. Procédé selon la revendication 15, lesdits composants logiciels comprenant des JavaBeans.

18. Procédé selon l'une des revendications 15 à 17, comprenant une étape de sélection par l'usager de composants logiciels dans une palette (55) dont dispose ledit serveur de télécommunication vocal (5).

19. Procédé selon l'une des revendications 15 à 18, comprenant une étape de définition des interactions entre lesdits composants logiciels au moyen d'un outil de construction (56).

20. Procédé selon l'une des revendications 18 ou 19, comprenant une étape de connexion dudit serveur de télécommunication vocal (5) à un ou plusieurs serveurs (3) dans lesquels sont mémorisés au moins certains desdits composants de ladite palette (55).

21. Procédé selon l'une des revendications 15 à 20, comprenant une étape de modification de ladite collection p(x) de composants logiciels au moyen d'instructions audit serveur de télécommunication vocal (5).

22. Procédé selon la revendication précédente, lesdites instructions étant des instructions vocales, ledit procédé comprenant une étape d'analyse et d'interprétation desdites instructions vocales.

23. Procédé selon l'une des revendications 15 à 22, comprenant une étape de modification de ladite collection de composants logiciels (p(x)) au moyen d'instructions envoyées via Internet (4) audit serveur de télécommunication vocal (5).

24. Procédé selon l'une des revendications 15 à 23, comprenant une étape de débogage par l'usager de ladite collection (p(x)) de composants logiciels qui lui est associée.

25. Procédé selon l'une des revendications 15 à 24, comprenant une étape d'importation d'une collection de composants logiciels et d'association de ladite collection à un usager (1).

26. Procédé selon l'une des revendications 15 à 25, comprenant une étape de facturation à l'usager (1).

27. Procédé selon la revendication précédente, le montant facturé dépendant de la taille de ladite collection de composants logiciels (p(x)).

28. Procédé selon l'une des revendications 26 ou 27, le montant facturé étant au moins partiellement retourné à un ou plusieurs fournisseurs (3) desdits composants logiciels.

29. Procédé selon l'une des revendications 15 à 28, dans lequel ledit usager passe d'un mode d'utilisation dudit serveur de télécommunication vocal à un mode d'édition de ladite interface vocale.

30. Procédé selon l'une des revendications 15 à 29, dans lequel ledit usager accède de façon synchronisée par ledit réseau téléphonique et par Internet audit serveur de télécommunication vocal.

31. Composant logiciel spécifiquement destiné à être utilisé dans un serveur de télécommunication vocal (5) selon l'une des revendications 1 à 14 afin de modifier l'interface vocale proposée à un usager.

32. Support de données comprenant des composants logiciels spécifiquement destinés à être chargés dans une zone de mémoire (50) d'un serveur de télécommunication vocal (5) selon l'une des revendications 1 à 14 afin de modifier l'interface vocale dudit serveur local lorsqu'un usager (1) y accède.

33. Support de données comprenant un programme apte à être exécuté par un serveur de télécommunication vocal (5) afin de lui faire exécuter le procédé d'une des revendications 15 à 30.

## Claims

1. Voice telecommunication server (5) accessible by a plurality of users (1) of a telephone network (2), comprising:
a memory zone (50), a plurality of collections (p) of software components being stored in said memory zone, said software components comprising programs or portions of programs, each of said collections being associated to at least one of said users and determining the vocal interface of said voice telecommunication server when accessed through said telephone network,
at least a plurality of said users (1) having the possibility of personalising the voice interfaced proposed to them by modifying said collection (p(x)) of software components.

2. Voice telecommunication server according to the preceding claim, said software components comprising precompiled components.

3. Voice telecommunication server according to claim 1, said software components comprising JavaBeans.

4. Voice telecommunication server according to one of the preceding claims, having a toolbox (55) of software components that can be selected by said users.

5. Voice telecommunication server according to the preceding claim, comprising a construction tool (56) allowing the users (1) to select the software components in said toolbox (55) and to define the interaction between different software components so as to determine said voice interface.

6. Voice telecommunication server according to one of the claims 4 or 5, said toolbox (55) being stored in said voice telecommunication server (5).

7. Voice telecommunication server according to one of the claims 4 to 6, said toolbox (55) being stored in a plurality of servers (3) to which said voice telecommunication server (5) is connected through a telecommunication network (4).

8. Voice telecommunication server according to one of the claims 5 to 7, comprising a voice analysis module (54) capable of interpreting voice commands received from said users (1) through said commuted telephone network for commanding said construction tool (56).

9. Voice telecommunication server according to the preceding claim, said voice analysis module (54) allowing the code of a component to be edited by dictating it.

10. Voice telecommunication server according to one of the claims 5 to 9, capable of being connected to Internet (4) and comprising a module (57) capable of interpreting commands received through the Internet for commanding said construction tool (56).

11. Voice telecommunication server according to one of the preceding claims, comprising a debugger (59) for debugging said collections of software components (p(x)).

12. Voice telecommunication server according to one of the preceding claims, capable of importing a collection of software components and to associate it in said memory zone (50) with a user (1).

13. Voice telecommunication server according to one of the preceding claims, capable of being accessed in a synchronised fashion through a telephone network and through the Internet.

14. Telecommunication system comprising a plurality of users (1), at least one telephone switchboard and a voice telecommunication server (5) according to one of the preceding claims, wherein said telephone switchboard is programmed so that at least part of said subscribers connect directly to said voice telecommunication server (5) when they lift the receiver.

15. Method allowing a user (1) to personalise the voice interface of a voice telecommunication server (5) accessed through a telephone network,
comprising a step in which the user modifies a collection (p(x)) of software components associated to said user and determining said voice interface, said software components comprising programs or portions of programs.

16. Method according to the preceding claim, said software components comprising precompiled components.

17. Method according to claim 15, said software components comprising JavaBeans.

18. Method according to one of the claims 15 to 17, comprising a step in which the user selects software components in a toolbox (55) available in said voice telecommunication server (5).

19. Method according to one of the claims 15 to 18, comprising a step in which the interactions between said software components are defined by means of a construction tool (56).

20. Method according to one of the claims 18 or 19, comprising a step in which said voice telecommunication server (5) is connected to one or several servers (3) in which at least certain of said components of said toolbox (55) are stored.

21. Method according to one of the claims 15 to 20, comprising a step in which said collection p(x) of software components is modified by means of instructions to said voice telecommunication server (5).

22. Method according to the preceding claim, said instructions being voice instructions, said method comprising a step in which said voice instructions are analysed and interpreted.

23. Method according to one of the claims 15 to 22, comprising a step in which said collection of software components (p(x)) is modified by means of instructions sent via Internet (4) to said voice telecommunication server (4).

24. Method according to one of the claims 15 to 23, comprising a step in which the user debugs said collection (p(x)) of software components associated to him.

25. Method according to one of the claims 15 to 24, comprising a step in which a collection of software components is imported and associated to a user (1).

26. Method according to one of the claims 15 to 25, comprising a step of billing the user (1).

27. Method according to the preceding claim, the billed amount depending on the size of said collection of software components (p(x)).

28. Method according to one of the claims 26 or 27, the amount billed being at least partially refunded to one or several suppliers (3) of said software components.

29. Method according to one of the claims 15 to 28, wherein said user switches from a use mode of said voice telecommunication server to an editing mode of said voice interface.

30. Method according to one of the claims 15 to 29, wherein said user accesses in synchronised fashion through said telephone network and through the Internet to said voice telecommunication server.

31. Software component specifically designed for being used in a voice telecommunication server (5) according to one of the claims 1 to 14 in order to modify the voice interfaced proposed to a user.

32. Data carrier comprising software components specifically designed for being loaded in a memory zone (50) of a voice telecommunication server (5) according to one of the claims 1 to 14 in order to modify the voice interface of said local sever when a user (1) accesses it.

33. Data carrier comprising a program capable of being executed by a voice telecommunication server (5) to have it execute the method of one of the claims 15 to 30.

## Patentansprüche

1. Sprachtelekommunikationsserver (5), von einer Mehrzahl von Benutzern (1) eines Telefonnetzwerks (2) zugänglich, umfassend:
eine Speicherzone (50), wobei eine Mehrzahl von Sammlungen (p) von Softwarekomponenten in besagter Speicherzone gespeichert sind, wobei besagte Softwarekomponenten Programme oder Programmteile enthalten, wobei jede dieser Sammlungen mit mindestens einem besagten Benutzer verknüpft ist und die Sprachschnittstelle besagtes Sprachtelekommunikationsservers während einem Zugriff durch besagtes Telefonnetzwerk bestimmt,
wobei mindestens eine Mehrzahl besagter Benutzer (1) die Möglichkeit hat, die ihnen angebotene Sprachschnittstelle zu personalisieren, indem besagte Sammlung (p(x)) von Softwarekomponenten geändert wird.

2. Sprachtelekommunikationsserver gemäss dem vorhergehenden Anspruch, wobei besagte Softwarekomponenten vorkompilierte Komponenten enthalten.

3. Sprachtelekommunikationsserver gemäss dem Anspruch 1, wobei besagte Softwarekomponenten JavaBeans enthalten.

4. Sprachtelekommunikationsserver gemäss einem der vorhergehenden Ansprüche, beinhaltend einen Werkzeugkasten (55) von Softwarekomponenten, die durch besagte Benutzer ausgewählt werden können.

5. Sprachtelekommunikationsserver gemäss dem vorhergehenden Anspruch, beinhaltend ein Bauwerkzeug (56), das den Benutzern (1) erlaubt, die Softwarekomponenten in besagtem Werkzeugkasten (55) auszuwählen und die Interaktion zwischen verschiedenen Softwarekomponenten zu definieren, um besagte Sprachschnittstelle zu bestimmen.

6. Sprachtelekommunikationsserver gemäss einem der Ansprüche 4 oder 5, wobei besagter Werkzeugkasten (55) in besagtem Sprachtelekommunikationsserver (5) gespeichert ist.

7. Sprachtelekommunikationsserver gemäss einem der Ansprüche 4 bis 6, wobei besagter Werkzeugkasten (55) in einer Mehrzahl von Servern (3) gespeichert ist, mit welchen besagter Sprachtelekommunikationsserver (5) durch ein Telekommunikationsnetzwerk (4) verbunden ist.

8. Sprachtelekommunikationsserver gemäss einem der Ansprüche 5 bis 7, beinhaltend ein Sprachanalysemodul (54), das von besagten Benutzern (1) durch besagtes Telefonwählnetzwerk empfangene Sprachbefehle interpretieren kann, um besagtes Bauwerkzeug (56) zu steuern.

9. Sprachtelekommunikationsserver gemäss dem vorhergehenden Anspruch, wobei besagtes Sprachanalysemodul (54) es erlaubt, den Kode einer Komponente durch Diktieren zu editieren.

10. Sprachtelekommunikationsserver gemäss einem der Ansprüche 5 bis 9, der mit Internet (4) verbunden werden kann und ein Modul (57) beinhaltet, das fähig ist, die durch Internet empfangene Befehle zu interpretieren, um besagtes Bauwerkzeug (56) zu steuern.

11. Sprachtelekommunikationsserver gemäss einem der vorhergehenden Ansprüche, beinhaltend ein Debug-Programm (59), um besagte Sammlungen von Softwarekomponenten (p(x)) von Fehlern zu bereinigen.

12. Sprachtelekommunikationsserver gemäss einem der vorhergehenden Ansprüche, der fähig ist, eine Sammlung von Softwarekomponenten zu importieren und mit einem Benutzer (1) in besagter Speicherzone (50) zu verknüpfen.

13. Sprachtelekommunikationsserver gemäss einem der vorhergehenden Ansprüche, auf dem synchron durch ein Telefonnetzwerk und durch Internet zugegriffen werden kann.

14. Telekommunikationssystem, beinhaltend eine Mehrzahl von Benutzern (1), mindestens eine Telefonzentrale und einen Sprachtelekommunikationsserver (5) gemässe einem der vorhergehenden Ansprüche, in welchem besagte Telefonzentrale so programmiert ist, dass mindestens ein Teil besagter Teilnehmer direkt mit besagtem Sprachtelekommunikationsserver (5) verbunden werden, wenn sie den Telefonhörer abnehmen.

15. Verfahren, das einem Benutzer (1) erlaubt, die Sprachschnittstelle eines durch ein Telefonnetzwerk zugänglichen Sprachtelekommunikationsserver (5) zu personalisieren,
beinhaltend einen Schritt, in dem der Benutzer eine Sammlung (p(x)) von Softwarekomponenten ändert, die mit besagtem Benutzer verknüpft ist und besagte Sprachschnittstelle bestimmt, wobei besagte Softwarekomponenten Programme oder Programmteile umfassen.

16. Verfahren gemäss dem vorhergehenden Anspruch, wobei besagte Softwarekomponenten vorkompilierte Komponenten enthalten.

17. Verfahren gemäss dem Anspruch 15, wobei besagte Softwarekomponenten JavaBeans enthalten.

18. Verfahren gemäss einem der Ansprüche 15 bis 17, beinhaltend einen Schritt, in dem der Benutzer Softwarekomponenten aus einem Werkzeugkasten (55) auswählt, über den besagter Sprachtelekommunikationsserver (5) verfügt.

19. Verfahren gemäss einem der Ansprüche 15 bis 18, beinhaltend einen Schritt, in dem die Interaktionen zwischen besagten Softwarekomponenten mittels eines Bauwerkzeugs (56) definiert werden.

20. Verfahren gemäss einem der Ansprüche 18 oder 19, beinhaltend einen Schritt, in dem besagter Sprachtelekommunikationsserver (5) mit einem oder mehreren Servern (3) verbunden wird, in welchen mindestens bestimmte besagte Komponenten aus besagtem Werkzeugkasten (55) gespeichert sind.

21. Verfahren gemäss einem der Ansprüche 15 bis 20, beinhaltend einen Schritt, in dem besagte Sammlung (p(x)) von Softwarekomponenten mittels Befehle an besagten Sprachtelekommunikationsserver (5) geändert wird.

22. Verfahren gemäss dem vorhergehenden Anspruch, wobei besagte Befehle Sprachbefehle sind, wobei besagtes Verfahren einen Schritt beinhaltet, in dem besagte Sprachbefehle analysiert und interpretiert werden.

23. Verfahren gemäss einem der Ansprüche 15 bis 22, beinhaltend einen Schritt, in dem besagte Sammlung von Softwarekomponenten (p(x)) mittels via Internet (4) an besagten Sprachtelekommunikationsserver (5) gesandten Befehlen geändert wird.

24. Verfahren gemäss einem der Ansprüche 15 bis 23, beinhaltend einen Schritt, in dem der Benutzer besagte mit ihm verknüpfte Sammlung von Softwarekomponenten (p(x)) von Fehlern bereinigt.

25. Verfahren gemäss einem der Ansprüche 15 bis 24, beinhaltend einen Schritt, in dem eine Sammlung von Softwarekomponenten importiert und mit einem Benutzer (1) verknüpft wird.

26. Verfahren gemäss einem der Ansprüche 15 bis 25, beinhaltend einen Schritt des Verrechnens an den Benutzer.

27. Verfahren gemäss dem vorhergehenden Anspruch, wobei der verrechnete Betrag von der Grösse besagter Sammlung von Softwarekomponenten (p(x)) abhängig ist.

28. Verfahren gemäss einem der Ansprüche 26 oder 27, wobei der verrechnete Betrag mindestens teilweise an einem oder mehrere Lieferanten (3) besagter Softwarekomponenten zurückerstattet wird.

29. Verfahren gemäss einem der Ansprüche 15 bis 28, in welchem besagter Benutzer zwischen einem Benutzermodus besagtes Sprachtelekommunikationsserver und einem Editiermodus besagter Sprachschnittstelle wechselt.

30. Verfahren gemäss einem der Ansprüche 15 bis 29, in welchem besagter Benutzer synchron durch besagtes Telefonnetzwerk und durch Internet auf besagten Sprachtelekommunikationsserver zugreift.

31. Softwarekomponenten, die spezifisch dazu bestimmt sind, in einem Sprachtelekommunikationsserver (5) gemäss einem der Ansprüche 1 bis 14 verwendet zu werden, um die einem Benutzer vorgeschlagene Sprachschnittstelle zu ändern.

32. Datenträger, beinhaltend Softwarekomponenten, die spezifisch dazu bestimmt sind, in eine Speicherzone (50) eines Sprachtelekommunikationsservers (5) gemäss einem der Ansprüche 1 bis 14 geladen zu werden, um die Sprachschnittstelle besagtes lokalen Servers zu ändern, wenn ein Benutzer (1) darauf zugreift.

33. Datenträger, beinhaltend ein Programm, das von einem Sprachtelekommunikationsserver (5) durchgeführt werden kann, um ihn das Verfahren einer der Ansprüche 15 bis 30 durchführen zu lassen.
